# EUROPEAN PATENT SPECIFICATION

(11) **EP 3 396 994 B1**
(45) Date of publication and mention of the grant of the patent: **02.12.2020**
(21) Application number: 17168377.4
(22) Date of filing: 27.04.2017
(51) Int. Cl.: H04W 12/06, H04W 8/00, H04L 12/54, H04L 29/08, H04W 48/16, G06F 3/06

(54) **LOCAL CONNECTION ESTABLISHMENT**
HERSTELLEN EINER LOKALEN VERBINDUNG
ÉTABLISSEMENT DE CONNEXION LOCALE

(43) Date of publication of application: 31.10.2018
(73) Proprietor: ABB Schweiz AG, 5400 Baden (CH)
(72) Inventor: Hu, Zhongliang, 00380 Helsinki (FI); Tanila, Teemu, 00380 Helsinki (FI); Kohvakka, Mikko, 00380 Helsinki (FI)
(74) Representative: Kolster Oy Ab

(56) References cited:
- US-A1- 2016 191 642
- US-A1- 2016 246 291
- US-A1- 2017 006 410
- US-B1- 6 622 018
- US-B2- 7 590 086
- Mats Anderson: "Wireless Technologies for Industrial Applications", , 19 March 2012 (2012-03-19), XP055581139, Retrieved from the Internet: URL:http://www.modbus.org/member_docs/Indu strial%20use%20of%20Bluetooth,%20Wireless% 20LAN%20and%20IEEE%20802.15.4.pdf [retrieved on 2019-04-15]

## Description

### FIELD OF THE INVENTION

The invention relates to a communications system, and particularly to local connection establishment between communications devices.

### BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

Several drives may be daisy-chained together within one drive cabinet. In an environment with multiple individual drives and/or multiple drive cabinets, it may be difficult to navigate through the physical connections in a large drive control room, to locate a specific drive and communicate with it, for example, to change a drive parameter setting of the specific drive.

US7590086B2 discloses that when a new wireless device arrives within the communication range of any member of an ad hoc network, its inquiry signals are answered by the first member detecting the inquiry.

### SUMMARY

The invention is set out in the appended claims. The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

### BRIEF DESCRIPTION OF THE DRAWINGS

In the following the invention will be described in greater detail by means of preferred embodiments with reference to the attached drawings, in which
Figure 1 shows a simplified architecture of a system according to an exemplary embodiment;
Figure 2 illustrates exemplary information exchange;
Figures 3 to 5 are flow charts illustrating exemplary functionalities;
Figure 6 is a block diagram of an exemplary apparatus.

### DETAILED DESCRIPTION OF THE INVENTION

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

The present invention is applicable to any system that is configured to support ad-hoc local connections, the connection using pairing as an access method, or as part of an access method. Pairing is a process in which two devices establish together a connection, typically a Bluetooth connection, between the two devices. During pairing a device is typically configured to confirm an identity of a counterpart device before the device is let to connect to the counterpart device. Usually, but not always, the pairing includes that the device and the counterpart device establish a relationship by creating, using the identity of the counterpart device as one input, a shared secret known as a link key.

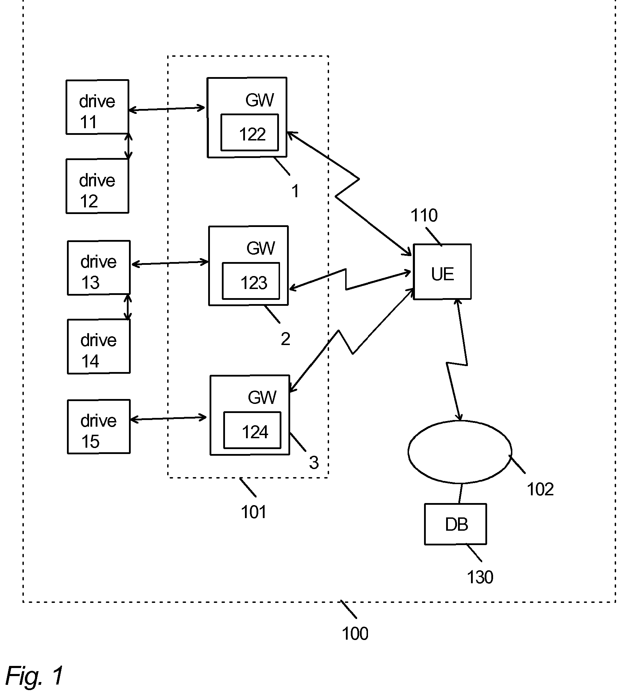

Drives and drive cabinets may be equipped with a wireless (e.g. Bluetooth) interface so that a configuration device, e.g. a mobile terminal, is able to wirelessly scan the drives and drive cabinets to acquire information on which drives are configurable by the mobile terminal, and automatically establish a connection between the drive and the mobile terminal when needed for end-user purposes. The drives may include wireless connectivity to communications devices (e.g. mobile terminals). As illustrated in Figure 1, in the environment with multiple individual drives and/or multiple drive cabinets, some of the drives 11, 13, 15 may be directly connected to an intermediate device e.g. gateway device 1, 2, 3 which may be a drive control panel, providing a wireless access to the mobile terminal, while other drives 12, 14 may be interconnected (daisy-chained) via wired communication links to other drives. A direct connection between the drive and the gateway device may be via a wired link, e.g .via a serial port. The mobile terminal is able to search (i.e. scan) for the gateway devices 1, 2, 3, but not for the actual drives 11, 12, 13, 14, 15. The user of the mobile terminal does not receive information on the drives 11, 12, 13, 14, 15 that are reachable via the gateway devices 1, 2, 3 (but instead the mobile terminal receives information on the gateway devices). Thus, when the user wishes to establish a connection from the mobile terminal to a specific drive (for example, drive 12 in Figure 1), s/he first needs to check which gateway device provides the connection to that specific drive (for example, gateway device 1 in Figure 1). That may be difficult from the usability point of view, especially at an industrial site with a lot of drives and gateway devices.

An embodiment enables making the selection of the gateway device automatic, by outputting a complete list of available drives 11, 12, 13, 14, 15 on the user interface of the mobile terminal, instead of outputting a list of the gateway devices 1, 2, 3. The mobile terminal is able to hide or mask the physical connection paths to the particular drives, and only output information on the drives.

A database server maintains a list of drives that are reachable and information on the gateway devices that provide the connections to the specific drives either directly via the gateway device and/or via the daisy-chains. Further, pairing information and/or authentication information (PIN codes, identifiers, passkeys etc.) to be able to automatically establish the connection from the mobile terminal to the gateway device may be stored in the database server.

The mobile terminal comprises an interface capable of establishing a Bluetooth connection between the mobile terminal and the gateway device, performing mode changes (Bluetooth connected mode/Bluetooth non-connected mode), and/or any other actions to establish the connection. The mobile terminal comprises means capable of running the process proactively in the background. The mobile terminal is configured to scan the available gateway devices, obtain from the database server information on available drives via the gateway devices, and output information on the available drives. In response to the user selecting (by using an appropriate user interface in the mobile terminal) from the list the drive where s/he wishes to connect, the mobile terminal transmits a request to establish a connection from the mobile terminal to the selected drive via the corresponding gateway device. If the selected drive is reachable via more than one gateway devices, the mobile terminal may be configured to automatically decide which gateway device to use for the connecting. The decision may be based on some predetermined criteria, e.g. the gateway device having the strongest wireless signal detected in the mobile terminal may be used.

Alternatively, the list of available drives is obtained such that the mobile device operates in a non-connected mode and receives broadcasts such as advertising packets (the advertising packets are specified in a Bluetooth low energy specification). The data, such as the advertising packets, is broadcast by the gateway devices, including the list of drives that are reachable through the specific gateway device. The mobile device is configured to receive the list of reachable drives by receiving the broadcast advertising packets. In response to the user of the mobile device entering a request to connect to a drive, the application in the mobile device automatically selects the best gateway and initiates the pairing procedure between the drive and the mobile device. A pin code and/or other authentication information may be obtained from the cloud service, as described herein.

An embodiment enables more user friendly experience and more dynamic control and management of the fleet of drives. The user does not have to worry about which wireless gateway to select first, and then connect to the drive s/he wishes to connect. Instead, the user may simply select the drive directly from the list, and based on the user input, the mobile terminal automatically establishes the connection via the optimal gateway device and performs the pairing and authentication routines. An embodiment enables enhanced network management with improved end-user experience, since the user does not need to know the exact physical connections of the drives nor the user needs to perform any additional operations to establish the connection in order to connect to and/or operate a specific drive by means of the mobile terminal.

An embodiment is applicable to any system that is configured to support ad-hoc local connections, the connection using pairing as an access method, or as part of an access method. Pairing is a process in which two devices establish together a connection, typically a Bluetooth connection, between the two devices. During pairing a device is typically configured to confirm an identity of a counterpart device before the device is let to connect to the counterpart device. Usually, but not always, the pairing includes that the device and the counterpart device establish a relationship by creating, using the identity of the counterpart device as one input, a shared secret known as a link key.

An extremely general architecture of an exemplary system 100 is illustrated in Figure 1. Figure 1 is a simplified system architecture only showing some elements, functional entities, which are logical units whose implementation may differ from what is shown, and some equipment. It is apparent to a person skilled in the art that the system comprises any number of shown elements, other equipment, other functions and structures that are not illustrated.

In the embodiment illustrated in Figure 1, the system 100 comprises one or more local connection networks 101 (only one illustrated in Figure 1). The local connection network may use a so-called short range wireless technology, for example Bluetooth, Wi-Fi, ZigBee and/or Li-Fi, without restricting the technology providing two-way ad-hoc connections to them. The local connection network may be a piconet or a scatternet in an industrial site, for example.

In the illustrated example the local connection network 101 comprises a user apparatus (UE) 110 of a remote user. The user apparatus 110 refers to a portable computing device (equipment), and it may also be referred to as a user terminal, user device, or mobile terminal. Such computing devices (apparatuses) include wireless mobile communication devices operating with or without a subscriber identification module (SIM) in hardware or in software, including, but not limited to, the following types of devices: mobile phone, smart-phone, personal digital assistant (PDA), laptop and/or touch screen computer, tablet (tablet computer), multimedia device and wearable computer (wearable device). The user apparatus 110 may have at least two communications interfaces, e.g. two antennas, one to connect to the database server 130 wirelessly over one or more networks 102 and at least one to connect to a gateway device 1, 2, 3 over an ad-hoc connection (local connection). For ad-hoc connections requiring pairing the user apparatus 110 may comprise a pairing unit (not shown in Figure 1). It should be appreciated that in the user apparatus 110 the number of reception and/or transmission antennas, or other communication interfaces, may naturally vary according to a current implementation.

At the simplest, an ad-hoc connection requires in addition to the user apparatus 110 in the local connection network 101 one counterpart device with which to establish the ad-hoc connection, the counterpart device being any kind of a device configured to implement a pairing related functionality. In the illustrated example of Figure 1, the local connection network 101 may be configured to support a "trust network", in which communication between the user apparatus 110 and a trusting device 11, 12, 13, 14, 15 passes via a corresponding trusted device 1, 2, 3. The trust may be created by using key-based encryption communication, such as public key infrastructure or shared secret infrastructure, for example. In other words, in the example illustrated in Figure 1, the gateway device 1 represents a trusted device (counterpart device) with which the user apparatus 110 may establish a two-way ad-hoc connection and a drive 11 and a drive 12 trust the gateway device 1, i.e. they are trusting devices. Hence, in the example of Figure 1, the gateway device 1 may comprise for ad-hoc connections in a memory 122 a PIN code used in pairing to confirm the identity and an access and pairing unit (not shown in Figure 1) that is in addition to ad-hoc connection configured to establish connections to trusting devices. Further, in the illustrated example it is assumed that the trusting devices are not configured to establish ad-hoc connections. Therefore the trusting devices, i.e. the drive 11 and the drive 12 (or drives 13, 14, 15), in turn comprise an access unit (not shown in Figure 1) configured to provide access to the user apparatus via the trusted device, the gateway device 1 (or 2 or 3, correspondingly). However, it should be appreciated that trusting devices may also be configured to establish ad-hoc connections. In Figure 1, the gateway device 2 represents a trusted device (counterpart device) with which the user apparatus 110 may establish a two-way ad-hoc connection and a drive 13 and a drive 14 trust the gateway device 2. The gateway device 2 comprises for ad-hoc connections in a memory 123 a PIN code used in pairing. The gateway device 3 represents a trusted device (counterpart device) with which the user apparatus 110 may establish a two-way ad-hoc connection and a drive 15 trusts the gateway device 3. The gateway device 3 comprises for ad-hoc connections in a memory 124 a PIN code used in pairing.

The database server 130 refers herein to a combination of data storage (database) and a data management system. The data storage may be any kind of conventional or future data repository, including distributed and centralized storing of data, a cloud-based storage in a cloud environment, managed by any suitable management system. The implementation of the data storage, the manner how data is stored, retrieved and updated are irrelevant to the invention, and therefore not described in detail here. Further, it should be appreciated that the location of the database server 130 is irrelevant to the embodiment. The database server 130 may locate in a remote service center, or in the same location where the gateway device 1, 2, 3 and the drives 11, 12, 13, 14, 15 are, for example.

The database server 130 is configured to support the pairing. For that purpose the database server 130 may comprise an authentication and code unit and a data storage (not shown in Figure 1) comprising username - password pairs, or corresponding associations associating a username (UN) with a password (PW), and identifier - PIN code pairs, or corresponding associations associating an identifying information (ID) with a PIN code (PIN). It should be appreciated that although in the above example the data storage comprises only one set of username - password pairs and identifier - PIN code pairs that need not to be the case. The data storage may comprise several sets of such pairs, associating a set of username -password pairs to one or more sets of identifier - PIN code pairs. With such a structure, it is easier to control which users (or user apparatuses) will have access to certain devices, like gateway devices in a location 1, 2, 3 and/or drives in a location 11, 12, 13, 14, 15.

The username and the password may be any kind of a string of characters, as is commonly known in the art. Depending on an implementation, the username-password pair may be defined only for access to the identifier-PIN code pairs, or they may be defined for a certain application, such as a remote maintenance application running in the user apparatus.

The identifier, or any corresponding identifying information identifies the counterpart devices, i.e. in the illustrated example the gateway device and the drives. The identifying information for a device may comprise its unique address, a device name, or a kind of nickname, i.e. a user friendly name given to the device, such as a Bluetooth name, possibly combined with its site name, for example, to create a unique identifier. The identifying information, called below mere "identifier", may be any kind of a string of characters, as is commonly known in the art.

The PIN code covers herein any code or corresponding information, like a password in Bluetooth password pairing, needed in the pairing procedure. For example, in Bluetooth any 16-byte UTF-8 string may be used as a PIN code. In other words, depending on the counterpart device and the used pairing algorithm, in Bluetooth pairing the PIN code may contain numeric input in length one to 16 digits, like "1234" or "123456", or any character string in length one to 16 digits. The PIN code may be a fixed PIN code hard-coded into the device, or a non-fixed PIN code updated at certain intervals, both to the device and to the database server. For example, the PIN code may be updated each time a connection is established, or the PIN code may be updated randomly. For example, a pairing seed may be used for creating updated PIN codes. It should be appreciated that he type of the PIN code bears no significance to the invention.

The one or more networks 102 (communications networks) providing information exchange at least between the user apparatus 110 and the database server 130, possibly also between the database server 130 and one or more counter-devices (the gateway device 1, 2, 3 and/or the drives 11, 12, 13, 14, 15) may comprise one or more wireless networks, wherein a wireless network may be based on any mobile system, such as GSM, GPRS, LTE, 4G, 5G and beyond, or a wireless local area network, such as Wi-Fi. Further, the one or more networks 102 may comprise one or more fixed networks and the internet.

The local connection network 101 in the illustrated example of Figure 1 may be used by the user apparatus 110 for remote maintenance purposes, to adjust or acquire parameters from the drives 11, 12, 13, 14, 15, for example, in which case the drives 11, 12, 13, 14, 15 represent industrial devices whose operations and/or service and/or maintenance may be taken care remotely via one or more communication interfaces and/or modules (such as the gateway device 1, 2, 3) that may be integral parts of a drive and/or external to the drive. In addition to drives, examples of such industrial devices 11, 12, 13, 14, 15 include frequency converters, AC/DC converters, DC/AC converters, DC/DC converters, programmable logic controllers, switches, motion controllers or motion drives, servo motors, soft starters, robots, cars, and heavy equipment, etc., just to list only some examples. In other words, the user apparatus (UE) 110 of a remote user may represent visiting equipment, and the gateway device 1, 2, 3, drive 11, 12, 13, 14, 15 represent permanent equipment. The permanent equipment means herein equipment that is intended to locate in the industrial site a long time, whereas the visiting equipment means equipment that is intended to visit the industrial site temporarily. However, it should be appreciated that the user apparatus 110 may be permanent equipment as well, or the local connection network may comprise devices that each are visiting equipment.

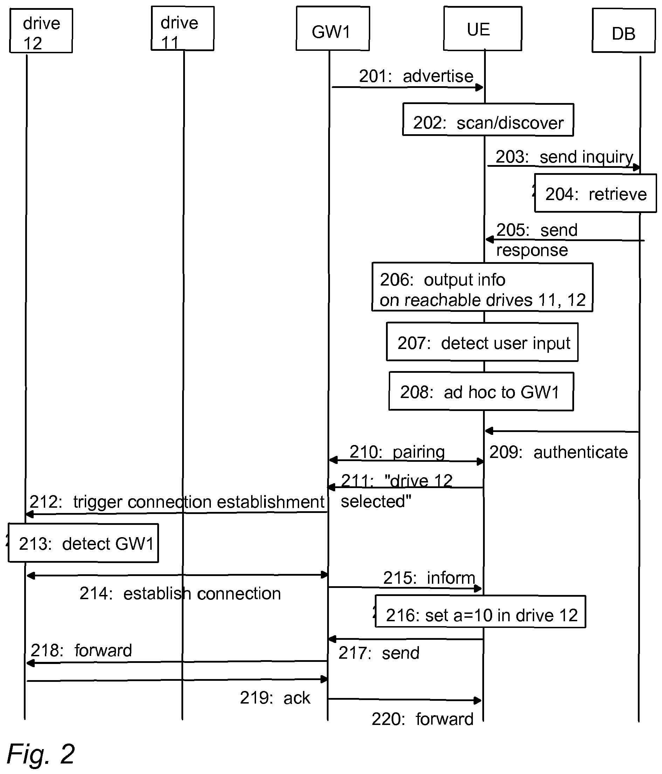

A pairing related procedure is illustrated in Figure 2. In the example it is assumed that the two-way ad-hoc connection is a Bluetooth connection that may be established between a user apparatus 110 and one or more counterparts 1, 2, 3, without restricting the examples to such an ad-hoc connection. Although not illustrated in example, depending on the selected pairing procedure, the pairing may contain additional steps. However, they are not illustrated herein. For example, instead of PIN code, secure simple pairing with passkey entry may be used, the passkey being a kind of a PIN code.

Referring to Figure 2, a user input selecting a specific application may be detected in the user apparatus 110 in step 202, and devices supporting Bluetooth and being in a discoverable mode may be scanned in step 202. Once found, sending an inquiry comprising an identifier of the discovered device 1 to the database server (DB) 130 may be caused in step 203. The identifier may be received 202 in "discover me" information advertised 201 by the gateway device 1, and the address of the database server 130 is preferably part of the specific application configuration. The specific application may be a dedicated application for establishing Bluetooth connections, or an application including establishment of Bluetooth connections, for example a remote maintenance application for mobile devices. Instead of the database server 130, the inquiry 203 may be sent to the memory 122 which may comprise an internal memory of the discovered gateway device.

Figure 2 illustrates information exchanges in a trust network. In the example it is assumed that the username - password pair is in a runtime memory of the user apparatus. Referring to Figure 2, in the example it is assumed that the gateway device 1 is in discoverable mode, ready to be paired, and broadcasts a wireless signal (message 201) that allows it to be detected, i.e. captured, by other Bluetooth-enabled devices, the broadcast signal containing the identifier of the gateway device 1. Further, it is assumed that the gateway device 1 may have two PIN codes: one for manual pairing and one for automatic pairing, the PIN code for automatic pairing being associable with trusting devices, the PIN code for manual pairing providing access only to the gateway device 1. It should be appreciated that the gateway device 1 may have one PIN code, or several PIN codes.

The user apparatus (UE) is in the scanning mode, detects the gateway device, in this case the gateway device 1 (receives the message 201 in point 202). The user apparatus 110 causes sending the inquiry 203 comprising the identifier of the gateway device 1 to the database server 130 in step 203, the inquiry 203 requesting information on drives reachable via the discovered gateway device.

The database server 130 receives the inquiry in step 204, retrieves identification information on one or more trusting devices trusting the gateway device 1, i.e. in this case devices 11 and 12 (i.e. drive 11 and drive 12). This means that the database server 130 compares the gateway device 1 identifier with gateway device identifier-drive identification information pairs, and returns drive identification information on those drives whose drive identification information matches the received gateway device 1 identifier. In step 205 the database server 130 causes sending the retrieved identification information to the user apparatus 110 in a response message 205.

In response to receiving the message 205, the user apparatus outputs the identification information included in message 205 to a user interface so that a user of the user apparatus is able to see (and/or hear, and/or feel if touch-based user interface is used) the found drives which in this case are drives 11 and 12. In step 207, the user apparatus 110 receives a user input indicating the drive selected by the user (in Figure 2 it is assumed that the drive selected by the user is drive 12).

The user apparatus 110 may automatically trigger a connection establishment 212, once the user apparatus 110 has detected the user input 207. In other words, an ad-hoc connection is to be established. The establishment of the ad-hoc connection may comprise an authentication procedure 209 (in which the user apparatus may send to the database server 130 an identifier, a username and a password, the database server perform a username-password comparison, and PIN code retrieval, and send at least the PIN code to the user apparatus (not shown in detail in Figure 2)). The user apparatus performs the pairing (one or more messages 210 between the user apparatus 110 and the gateway device 1) by sending the received PIN code to the gateway device 1, and finishes the pairing. Once the pairing is finished, the gateway device 1 detects that for the PIN code used in the pairing, trusting devices have been determined, which in the example are the drive 11 and the drive 12.

The gateway device 1 triggers connection establishment (message 212) to the selected trusting device which in the example is the drive 12 (as indicated in message 211 sent from UE to GW1). The drive 12 detects in point 213 that the connection establishment 212 is from a gateway device, the gateway device 1 that is a trusted device. Therefore the connection is established (message 214), and the gateway device 1 sends in message 215 to the user apparatus 110 information on the drive 12 accessible via the gateway device 1. The information may be output in point 216 via a user interface to the user. Assuming that the gateway device 1 is the master device in a piconet, access to the master device provides access to other devices in the piconet, without any further user input. However, it should be appreciated that the connection between the gateway device 1 and the user apparatus 110 does not need to be a Bluetooth connection, the connection may be any possible connection. Further, although not described in detail herein, the information sent over the connection may be encrypted information, decrypted in the receiving apparatus. Further, the information exchange, including establishment of the connections, between the drives may use any current or future way. For example, the information exchange may be implemented scatternet-mechanism like, as Bluetooth hop-by-hop, point-to-point, as a routing layer information exchange over the Bluetooth layer, receiver address or identifier may be in the message header, or in the payload, etc. Therefore information exchange is described in a very generic level, and there is no need to describe the information exchange in more detail.

In the illustrated example it is then detected in point 216 that, as a remote maintenance function, a parameter "a" is to be set to value 10 in the drive 12. Therefore message 217, comprising the information (set a=10) and indicating the drive 12 as a recipient is sent to the gateway device 1. The gateway device detects that the message is for the drive 12, and therefore sends message 218 to the drive 12 which performs the instructed settings (not illustrated), and sends an acknowledgement (message 219) to the gateway apparatus 1. The gateway apparatus 1 detects that message 219 is to the user apparatus 110, and sends message 220 to the user apparatus 110.

In an embodiment, the user apparatus may receive user input to pair to multiple drives, e.g. drives 11 and 12, or the user may select only some of the available drives. The user apparatus may be configured to perform retrieval of the identification information on the drives automatically, i.e. without asking the user a permission to send the inquiry 203.

As is evident from the above example, the automatic drive identification information inquiry provides easier drive selection since no user interaction is required for obtaining the list of reachable drives.

In an embodiment, the database server is configured to check in step 204, whether the user apparatus is authorized to connect to the drives and only indicates in step 205 the identification information on those drives that the user apparatus is authorized to connect to.

In another embodiment, the user apparatus's authorization to connect to the selected drive is checked during step 209, wherein the database server is configured to return to the user apparatus an error, if the user apparatus is not authorized to connect to the selected drive.

In an embodiment, the authentication and pairing steps 209, 210 may be performed before receiving the user input indicating the selected drive. In that case, the user apparatus may be configured to output information on those drives only that are reachable via those gateway devices to which the pairing was performed.

In an embodiment, the arrangement of gateway apparatuses may be implemented in the form of a mesh network. The user apparatus access to the drive may be implemented via one or more gateway apparatuses (each of which remain invisible to the user of the user apparatus).

In an embodiment, the drive information is retrieved from a database in a cloud server/cloud service, or from a local database in a gateway device, and the required drive information is read during the gateway discovery.

If the drive information is stored in the gateway, the user apparatus may be configured to retrieve the drive information from the gateway without pairing to the gateway first. In Bluetooth low energy, advertising packets (broadcasts) are used to advertise the presence of the gateway device, wherein the advertising packets may also be used to carry other information such as the drive information.

Thus, an embodiment involves discovering the gateway devices, retrieving drive information from the database, outputting drive information, receiving the user selection, solving the most optimal gateway device (there may be several gateway devices connected to a drive), performing pairing to a relevant gateway device, indicating the selected drive to the corresponding gateway device, and establishing a connection to the drive.

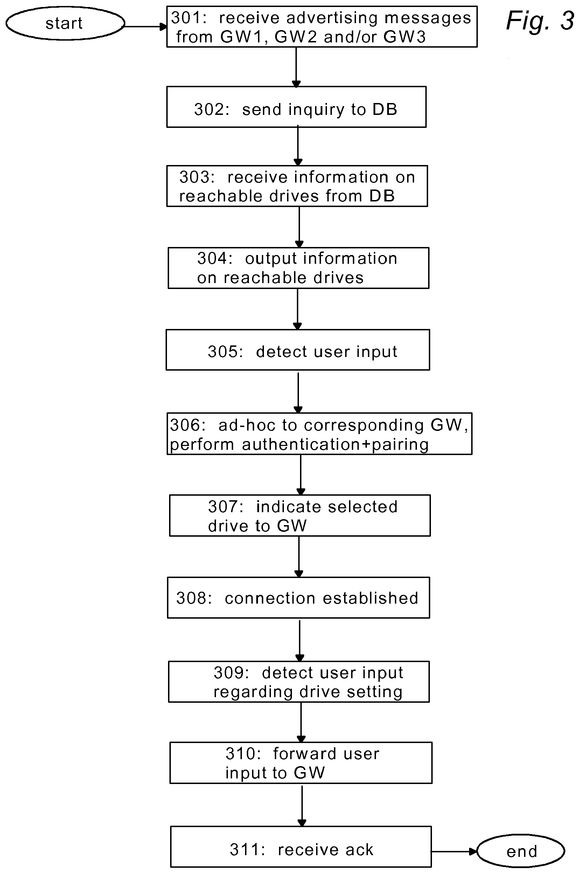

Figures 3 to 5 are flow charts illustrating exemplary embodiments. Referring to Figure 3, the user apparatus (UE) is in the scanning mode and detects the gateway device 1, 2 and/or 3 (i.e. receives the advertising message in point 301). The user apparatus 110 causes 302 sending an inquiry comprising the identifier of the gateway device 1, 2 and/or 3 to the database server 130, the inquiry requesting information on drives reachable via the discovered gateway device. In step 303, the user apparatus 110 receives from the database server 130 the retrieved identification information in a response message. In response to receiving the response message, the user apparatus outputs 304 the identification information included in the response message to a user interface, so that a user of the user apparatus 110 is able to see (and/or hear, and/or feel if touch-based user interface is used) the found drives. In step 305, the user apparatus 110 receives and detects a user input indicating the drive selected by the user. The user apparatus 110 may automatically trigger 306 a connection establishment, once the user apparatus 110 has detected 305 the user input. In other words, an ad-hoc connection is to be established 308. The establishment of the ad-hoc connection may comprise an authentication procedure 307 (in which the user apparatus 110 may send 307 to the database server 130 an identifier, a username and a password, and receive at least the PIN code from the database server (not shown in detail in Figure 3)). The user apparatus performs 306 the pairing (one or more messages are transmitted 306 between the user apparatus 110 and the gateway device) by sending the received PIN code to the gateway device, and finishes 306 the pairing. The selected trusting device i.e. the drive is indicated in a message sent 307 from UE to the gateway device. Therefore the connection is established 308. It is then detected in point 309 that, as a remote maintenance function, a parameter "a" is to be set to value 10 in the selected drive. Therefore a message comprising the information (set a=10) and indicating the drive as a recipient is sent 310 from UE to the corresponding gateway device. An acknowledgement message is received 311 from the gateway device in the user apparatus 110.

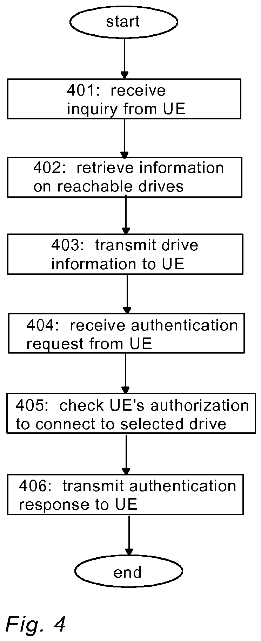

Referring to Figure 4, an inquiry comprising an identifier of a discovered device may be received in the database server (DB) in step 401 from the user apparatus 110, the inquiry 203 requesting information on drives reachable via the discovered gateway device. In response to receiving the inquiry in step 401, the database server retrieves 402 identification information on one or more trusting devices, i.e. the drive (s) trusting the gateway device. This means that the database server 130 compares 402 the gateway device identifier with gateway device identifier-drive identification information pairs, and returns 402 drive identification information on those drives whose drive identification information matches the received gateway device identifier. In step 403 the database server 130 causes sending the retrieved identification information to the user apparatus 110 in a response message. The establishment of the ad-hoc connection may comprise an authentication procedure in which the database server 130 may receive 404 from the user apparatus an identifier, a username and a password (receive 404 authentication request), perform 405 a username-password comparison and PIN code retrieval (check 405 UE's authorization to connect to the selected drive), and send 406 at least the PIN code to the user apparatus (send 406 authentication response).

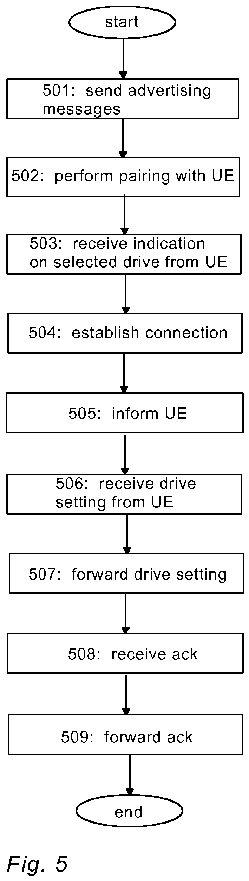

Referring to Figure 5, the gateway device may advertise 501 "discover me" information by sending advertising messages. It is assumed that the gateway device is in discoverable mode, ready to be paired, and broadcasts a wireless signal (advertising message) that allows it to be detected, i.e. captured, by other Bluetooth-enabled devices, the broadcast signal containing the identifier of the gateway device. Further, it is assumed that the gateway device may have two PIN codes: one for manual pairing and one for automatic pairing, the PIN code for automatic pairing being associable with trusting devices, the PIN code for manual pairing providing access only to the gateway device. It should be appreciated that the gateway device may have one PIN code, or several PIN codes. The pairing is performed 502 between the user apparatus 110 and the gateway device, including receiving the PIN code in the gateway device. Once the pairing is finished, the gateway device detects that for the PIN code used in the pairing, at least one trusting device has been determined, i.e. the drive(s). The gateway device triggers 504 connection establishment to the selected trusting device (indicated in a message received 503 from UE in the gateway device). Therefore the connection is established 504, and the gateway device sends 505 in a message to the user apparatus 110 information on the drive accessible via the gateway device. Assuming that the gateway device is the master device in a piconet, access to the master device provides access to other devices in the piconet, without any further user input. However, it should be appreciated that the connection between the gateway device and the user apparatus 110 does not need to be a Bluetooth connection, the connection maybe any possible connection. Further, although not described in detail herein, the information sent over the connection may be encrypted information, decrypted in the receiving apparatus. Further, the information exchange, including establishment of the connections, between the drives may use any current or future way. For example, the information exchange may be implemented scatternet-mechanism like, as Bluetooth hop-by-hop, point-to-point, as a routing layer information exchange over the Bluetooth layer, receiver address or identifier may be in the message header, or in the payload, etc. Therefore information exchange is described in a very generic level, and there is no need to describe the information exchange in more detail. In the illustrated example, as a remote maintenance function, a parameter "a" is to be set to value 10 in the drive. Therefore a message comprising the information (set a=10) and indicating the drive 12 as a recipient is received 506 in the gateway device from UE. The gateway device detects 506 that the message is for a specific drive, and therefore sends 507 (forwards) the message to the drive. An acknowledgement message is received 508 in the gateway apparatus from the drive, indicating that the parameter "a" was set to the value 10 in the drive. The gateway apparatus detects that the acknowledgement message is to the user apparatus 110, and sends 509 a message (i.e. forwards the acknowledgement message) to the user apparatus 110.

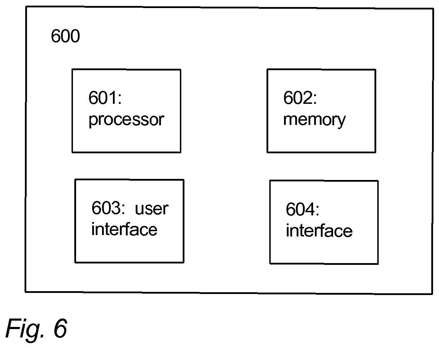

Figure 6 provides an apparatus 600 according to some embodiments of the invention. Figure 6 illustrates an apparatus configured to carry out the functions described above in connection with at least one of Figures 1, 2, 3, 4 and/or 5. The apparatus 600 may comprise one or more communication control circuitries, such as at least one processor 601, and at least one memory 602 including one or more algorithms such as a computer program code (software) wherein the at least one memory and the computer program code (software) are configured, with the at least one processor 601, to cause the apparatus 600 to carry out any one of the exemplified functionalities of at least one of the user apparatus, server (data base server), gateway apparatus and drive. The memory 602 may comprise a database for storing information on gateway apparatus - drive pairs, as described above, for example, in connection with Figure 1, 2, 3, 4 and/or 5. The apparatus 600 may further comprise one or more communication interfaces 603, and a user interface 604.

Referring to Figure 6, at least one of the communication control circuitries in the apparatus 600 is configured to carry out functionalities, described above by means of any of Figures 1 to 5, by one or more circuitries.

The memory 602 or part of it may be implemented using any suitable data storage technology, such as semiconductor based memory devices, flash memory, magnetic memory devices and systems, optical memory devices and systems, fixed memory and removable memory.

The one or more communication interfaces (TX/RX) 603 may comprise hardware and/or software for realizing communication connectivity according to one or more communication protocols. The communication interface may provide the apparatus with communication capabilities to communicate over a local connection and/or local connections and/or in a cellular communication system and/or in a fixed network, and enable communication between different apparatuses. The communication interface 603 may comprise standard well-known components such as an amplifier, filter, frequency-converter, (de) modulator, and encoder/decoder circuitries and one or more antennas. The communication interfaces 603 may comprise radio interface components and/or other wireless interface components providing the apparatus with wireless communication capability.

A user interface 604 may be any kind of a user interface, for example, a screen, keyboard, microphone and one or more loudspeakers for interaction with the user.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying soft-ware and/or firmware. The term 'circuitry' would also cover, for example and if applicable to the particular element, a baseband integrated circuit or applications processor integrated circuit for a user apparatus or a similar integrated circuit in a server, or in a counterpart device.

In an embodiment, the at least one processor 601, the memory 602, and the computer program code form processing means or comprises one or more computer program code portions for carrying out one or more operations according to any one of the embodiments of Figures 1 to 5 or operations thereof.

Embodiments as described may also be carried out in the form of a computer process defined by a computer program or portions thereof. Embodiments of the methods described in connection with Figures 1 to 5 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

The steps, points, related functions, and information exchanges described above by means of Figures 1 to 6 are in no absolute chronological order, and some of them may be performed simultaneously or in an order differing from the given one. Other functions can also be executed between them or within them, and other information may be sent. Some of the steps or points or part of the steps or points or one or more pieces of information can also be left out or replaced by a corresponding step, point or part of the step, point or one or more pieces of information.

Herein, a drive 11, 12, 13, 14, 15 may refer to a frequency converter, AC/DC converter, DC/AC converter, DC/DC converter, programmable logic controller, switch, motion controller, motion drive, servo motor, soft starter, robot, car, heavy equipment, and/or any other device for industrial automation.

The techniques and methods described herein may be implemented by various means so that a user apparatus/terminal device, its counterpart device and/or a server device/a database server configured to support pairing based on at least partly on what is disclosed above with any of Figures 1 to 6, including implementing one or more functions/operations of a corresponding terminal device and/or its counterpart device and/or a server device described above with an embodiment/example, for example by means of any of Figures 1 to 6, comprises not only prior art means, but also means for implementing the one or more functions/operations of a corresponding functionality described with an embodiment, and it or they may comprise separate means for each separate function/operation, or means may be configured to perform two or more functions/operations. For example, one or more of the means and/or units described above may be implemented in hardware (one or more devices), firmware (one or more devices), soft-ware (one or more modules), or combinations thereof. For a hardware implementation, the apparatus (es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, logic gates, other electronic units designed to perform the functions described herein by means of Figures 1 to 6, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment.

It will be obvious to a person skilled in the art that, as the technology advances, the inventive concept can be implemented in various ways. The invention and its embodiments are not limited to the examples described above but may vary within the scope of the claims.

## Claims

1. A computerized method performed by a first device (110) comprising
receiving, in the first device (110), identification
information on one or more second devices (1, 2, 3) reachable by the first device via a local connection network;
obtaining, in the first device, identification information from a database, on one or more third devices (11,12,13,14,15) trusting at least one second device of said one or more second devices;
outputting, in the first device, the identification information on said one or more third devices;
receiving, in the first device, a user input indicating a third device selected by a user based on the outputted identification information on said one or more third devices;
causing, in the first device, performing a two-way ad-hoc connection pairing via said local connection network to a second device trusted by the selected third device;
causing establishing a connection from the first device to the selected third device via said second device trusted by the selected third device;
wherein the third device (11, 12, 13, 14, 15) comprises an industrial device,
wherein the industrial device is an industrial automation device selected from a group consisting of a drive, frequency converter, AC/DC converter, DC/AC converter, DC/DC converter, programmable logic controller, switch, motion controller, motion drive, servo motor, and soft starter.

2. A method according to claim 1, wherein the first device (110) comprises a user apparatus.

3. A method according to claim 1 or 2, wherein the second device (1, 2, 3) comprises a gateway apparatus.

4. A method according to any of claims 1 to 3, wherein, if the selected third device is trusting more than one second devices, the method comprises automatically deciding in the first device which second device to use for the connection, based on a predetermined criteria.

5. A method according to claim 4, wherein the method comprises automatically deciding, in the first device, to use for the connection the second device that has the strongest wireless network signal strength detected in the first device.

6. A method according to any of claims 1 to 5, wherein the identification information on a third device is obtained, in the first device, from a corresponding second device or via a communications network from a database server.

7. A method as claimed in any preceding claims,
wherein the two-way ad-hoc connection pairing comprises Bluetooth pairing.

8. A system comprising
a user apparatus, being the first device (110) of claim 1,
comprising means for implementing a method as claimed in any of claims 1 to 7;
a local connection network;
one or more second devices, each second device being configured to
detect one or more third devices trusting the second device,
cause sending to the user apparatus, identification information on the detected one or more third devices (1, 2, 3, 4, 5) trusting the
second device,
perform, via the local connection network, a two-way ad-hoc connection pairing to the user apparatus,
receive, from the user apparatus, an indication on a third device selected by a user; establish a connection from the user apparatus via the second device to the selected third device trusting the second device;
wherein the third device (11, 12, 13, 14, 15) comprises an industrial device,
wherein the industrial device is an industrial automation device selected from a group consisting of a drive, frequency converter, AC/DC converter, DC/AC converter, DC/DC converter, programmable logic controller, switch, motion controller, motion drive, servo motor, and soft starter.

9. A system according to claim 8, wherein the system comprises
a database server (130) comprising means for storing information on second device - third device pairs; and
one or more communications networks (102) between the user apparatus and the database server for communicating the information on the second device - third device pairs to the user apparatus.

10. A computer program product comprising program instructions which, when run on a computing apparatus, being the first device (110) of claim 1, causes the computing apparatus to perform a method as claimed in any of claims 1 to 7.

11. A user apparatus, being the first device (110) of claim 1, comprising means for implementing a method as claimed in any of claims 1 to 7.

## Patentansprüche

1. Computergestütztes Verfahren, das von einem ersten Gerät (110) durchgeführt wird und umfasst:
Empfangen von Identifikationsinformationen über ein oder mehrere zweite Geräte (1, 2, 3), die durch das erste Gerät über ein lokales Verbindungsnetzwerk erreicht werden können, im ersten Gerät (110);
Abrufen von Identifikationsinformationen über ein oder mehrere dritte Geräte (11, 12, 13, 14, 15), die mindestens einem zweiten Gerät des einen oder der mehreren zweiten Geräten vertrauen, im ersten Gerät aus einer Datenbank;
Ausgeben der Identifikationen über das eine oder die mehreren dritten Geräte im ersten Gerät;
Empfangen einer Benutzereingabe im ersten Gerät, die ein drittes Gerät angibt, das von einem Benutzer basierend auf den ausgegebenen Identifikationsinformationen über das eine oder die mehreren dritten Geräte ausgewählt wird; Veranlassen des Durchführens einer Zweiwege-Ad-hoc-Verbindungskopplung im ersten Gerät über das lokale Verbindungsnetzwerk mit einem zweiten Gerät, dem vom ausgewählten dritten Gerät vertraut wird;
Veranlassen des Herstellens einer Verbindung vom ersten Gerät zum ausgewählten dritten Gerät über das zweite Gerät, dem vom ausgewählten dritten Gerät vertraut wird, wobei das dritte Gerät (11, 12, 13, 14, 15) ein industrielles Gerät umfasst,
wobei das industrielle Gerät ein industrielles Automatisierungsgerät ist, das aus einer Gruppe ausgewählt wird, die aus einem Antrieb, einem Frequenzumsetzer, einem AC/DC-Wandler, einem DC/AC-Wandler, einem DC/DC-Wandler, einer speicherprogrammierbaren Steuerung, einem Schalter, einer Bewegungssteuerung, einem Bewegungsantrieb, einem Servomotor und einem Softstarter besteht.

2. Verfahren nach Anspruch 1, wobei das erste Gerät (110) eine Benutzervorrichtung umfasst.

3. Verfahren nach Anspruch 1 oder 2, wobei das zweite Gerät (1, 2, 3) eine Gateway-Vorrichtung umfasst.

4. Verfahren nach einem der Ansprüche 1 bis 3, wobei, wenn das ausgewählte dritte Gerät mehr als einem zweiten Gerät vertraut, das Verfahren ein automatisches Entscheiden im ersten Gerät, welches zweite Gerät für die Verbindung verwendet werden soll, basierend auf einem vorbestimmten Kriterium umfasst.

5. Verfahren nach Anspruch 4, wobei das Verfahren ein automatisches Entscheiden im ersten Gerät umfasst, für die Verbindung die zweite Vorrichtung zu verwenden, die das stärkste Drahtlosnetzwerksignal aufweist, das im ersten Gerät detektiert wird.

6. Verfahren nach einem der Ansprüche 1 bis 5, wobei die Identifikationsinformationen über ein drittes Gerät im ersten Gerät von einem entsprechenden zweiten Gerät oder über ein Kommunikationsnetzwerk von einem Datenbankserver erhalten werden.

7. Verfahren nach einem der vorhergehenden Ansprüche, wobei die Zweiwege-Ad-hoc-Verbindungskopplung Bluetooth-Kopplung umfasst.

8. System, umfassend:
eine Benutzervorrichtung, wobei es sich um das erste Gerät (110) nach Anspruch 1 handelt, umfassend Mittel zum Implementieren eines Verfahrens nach einem der Ansprüche 1 bis 7;
ein lokales Verbindungsnetzwerk;
ein oder mehrere zweite Geräte, wobei jedes zweite Gerät konfiguriert ist zum:
Detektieren eines oder mehrerer dritter Geräte, die dem zweiten Gerät vertrauen,
Veranlassen des Sendens von Identifikationsinformationen über das eine oder die mehreren detektierten dritten Geräte (1, 2, 3, 4, 5), die der zweiten Vorrichtung vertrauen, an die Benutzervorrichtung,
Durchführen einer Zweiwege-Ad-hoc-Verbindungskopplung mit der Benutzervorrichtung über das lokale Verbindungsnetzwerk,
Empfangen einer Anzeige über das dritte Gerät, das von einem Benutzer ausgewählt wird, von der Benutzervorrichtung;
Herstellen einer Verbindung von der Benutzervorrichtung über das zweite Gerät zum ausgewählten dritten Gerät, das dem zweiten Gerät vertraut;
wobei das dritte Gerät (11, 12, 13, 14, 15) ein industrielles Gerät umfasst,
wobei das industrielle Gerät ein industrielles Automatisierungsgerät ist, das aus einer Gruppe ausgewählt ist, die aus einem Antrieb, einem Frequenzumsetzer, einem AC/DC-Wandler, einem DC/AC-Wandler, einem DC/DC-Wandler, einer speicherprogrammierbaren Steuerung, einem Schalter,
einer Bewegungssteuerung, einem Bewegungsantrieb, einem Servomotor und einem Softstarter besteht.

9. System nach Anspruch 8, wobei das System umfasst:
einen Datenbankserver (130), der Mittel zum Speichern von Informationen über Paare zweiter und dritter Vorrichtungen umfasst;
ein oder mehrere Kommunikationsnetzwerke (102) zwischen der Benutzervorrichtung und dem Datenbankserver zum Kommunizieren der Informationen über die Paare zweiter und dritter Vorrichtungen an die Benutzervorrichtung.

10. Computerprogrammprodukt, umfassend Programmanweisungen, die bei Ausführung auf einer Datenverarbeitungsvorrichtung, wobei es sich um das erste Gerät (110) nach Anspruch 1 handelt, die Datenverarbeitungsvorrichtung zum Durchführen eines Verfahrens nach einem der Ansprüche 1 bis 7 veranlassen.

11. Benutzervorrichtung, wobei es sich um das erste Gerät (110) nach Anspruch 1 handelt, umfassend Mittel zum Implementieren eines Verfahrens nach einem der Ansprüche 1 bis 7.

## Revendications

1. Procédé informatisé réalisé par un premier dispositif (110), comprenant
la réception, dans le premier dispositif (110), d'informations d'identification concernant un ou plusieurs deuxièmes dispositifs (1, 2, 3) joignables par le premier dispositif par le biais d'un réseau de connexion local ;
l'obtention, dans le premier dispositif, auprès d'une base de données, d'informations d'identification concernant un ou plusieurs troisièmes dispositifs (11, 12, 13, 14, 15) faisant confiance à au moins un deuxième dispositif desdits un ou plusieurs deuxièmes dispositifs ; la fourniture, dans le premier dispositif, des informations d'identification concernant lesdits un ou plusieurs troisièmes dispositifs ;
la réception, dans le premier dispositif, d'une entrée utilisateur indiquant un troisième dispositif sélectionné par un utilisateur sur la base des informations d'identification fournies concernant lesdits un ou plusieurs troisièmes dispositifs ;
le déclenchement, dans le premier dispositif, de la réalisation d'un jumelage de connexion bidirectionnelle ad hoc par le biais dudit réseau de connexion local avec un deuxième dispositif auquel le troisième dispositif sélectionné fait confiance ;
le déclenchement de l'établissement d'une connexion depuis le premier dispositif jusqu'au troisième dispositif sélectionné par le biais dudit deuxième dispositif auquel le troisième dispositif sélectionné fait confiance ;
le troisième dispositif (11, 12, 13, 14, 15) comprenant un dispositif industriel,
le dispositif industriel consistant en un dispositif d'automatisation industriel sélectionné dans un groupe constitué par un pilote, un convertisseur de fréquence, un convertisseur alternatif/continu, un convertisseur continu/alternatif, un convertisseur continu/continu, un contrôleur logique programmable, un commutateur, un contrôleur de mouvement, un pilote de mouvement, un servomoteur et un démarreur souple.

2. Procédé selon la revendication 1, dans lequel le premier dispositif (110) comprend un appareil utilisateur.

3. Procédé selon la revendication 1 ou 2, dans lequel le deuxième dispositif (1, 2, 3) comprend un appareil passerelle.

4. Procédé selon l'une quelconque des revendications 1 à 3, lequel procédé, si le troisième dispositif sélectionné fait confiance à plus d'un deuxième dispositif, comprend la prise de décision automatique, dans le premier dispositif, portant sur le deuxième dispositif à utiliser pour la connexion, sur la base d'un critère prédéterminé.

5. Procédé selon la revendication 4, lequel procédé comprend la prise de décision automatique, dans le premier dispositif, portant sur l'utilisation pour la connexion du deuxième dispositif dont l'intensité de signal de réseau sans fil détectée dans le premier dispositif est la plus forte.

6. Procédé selon l'une quelconque des revendications 1 à 5, dans lequel les informations d'identification concernant un troisième dispositif sont obtenues, dans le premier dispositif, auprès d'un deuxième dispositif correspondant ou, par le biais d'un réseau de communications, auprès d'un serveur de base de données.

7. Procédé selon l'une quelconque des revendications précédentes, dans lequel le jumelage de connexion bidirectionnelle ad hoc comprend un jumelage Bluetooth.

8. Système, comprenant
un appareil utilisateur, consistant en le premier dispositif (110) de la revendication 1, comprenant des moyens de mise en œuvre d'un procédé tel que revendiqué dans l'une quelconque des revendications 1 à 7 ;
un réseau de connexion local ;
un ou plusieurs deuxièmes dispositifs, chaque deuxième dispositif étant configuré pour
détecter un ou plusieurs troisièmes dispositifs faisant confiance au deuxième dispositif,
déclencher l'envoi, à l'appareil utilisateur, d'informations d'identification concernant les un ou plusieurs troisièmes dispositifs détectés (1, 2, 3, 4, 5) faisant confiance au deuxième dispositif ;
réaliser, par le biais du réseau de connexion local, un jumelage de connexion bidirectionnelle ad hoc avec l'appareil utilisateur ;
recevoir, depuis l'appareil utilisateur, une indication concernant un troisième dispositif sélectionné par un utilisateur ;
établir une connexion depuis l'appareil utilisateur, par le biais du deuxième dispositif, jusqu'au troisième dispositif sélectionné faisant confiance au deuxième dispositif ;
le troisième dispositif (11, 12, 13, 14, 15) comprenant un dispositif industriel,
le dispositif industriel consistant en un dispositif d'automatisation industriel sélectionné dans un groupe constitué par un pilote, un convertisseur de fréquence, un convertisseur alternatif/continu, un convertisseur continu/alternatif, un convertisseur continu/continu, un contrôleur logique programmable, un commutateur, un contrôleur de mouvement, un pilote de mouvement, un servomoteur et un démarreur souple.

9. Système selon la revendication 8, lequel système comprend
un serveur de base de données (130) comprenant des moyens de stockage d'informations concernant des paires deuxième dispositif - troisième dispositif ; et
un ou plusieurs réseaux de communications (102), entre l'appareil utilisateur et le serveur de base de données, destinés à communiquer les informations concernant les paires deuxième dispositif - troisième dispositif à l'appareil utilisateur.

10. Produit-programme d'ordinateur comprenant des instructions de programme qui, lorsqu'elles sont exécutées sur un appareil informatique, consistant en le premier dispositif (110) de la revendication 1, amènent l'appareil informatique à réaliser un procédé tel que revendiqué dans l'une quelconque des revendications 1 à 7.

11. Appareil utilisateur, consistant en le premier dispositif (110) de la revendication 1, comprenant des moyens de mise en œuvre d'un procédé tel que revendiqué dans l'une quelconque des revendications 1 à 7.
